Europäisches Patentamt

European Patent Office

Office européen des brevets

(19)

(11) Publication number: 0 259 844

A2

(12) # EUROPEAN PATENT APPLICATION

(21) Application number: 87113133.0

(51) Int. Cl.4: C22C 1/00

(22) Date of filing: 08.09.87

(30) Priority: 08.09.86 US 904316
08.09.86 US 905015
08.09.86 US 904997
08.09.86 US 905011
08.09.86 US 905013
08.09.86 US 904318
08.09.86 US 904317

(43) Date of publication of application:
16.03.88 Bulletin 88/11

(84) Designated Contracting States:
AT BE CH DE ES FR GB GR IT LI LU NL SE

(71) Applicant: GTE Products Corporation
100 West 10th Street
Wilmington, DE 19801(US)

(72) Inventor: Kemp, Preston B.
316A S. Main Street Athens
Pennsylvania 18810(US)
Inventor: Johnson, Walter A.
Rd. 5 Box 197
Towanda Pennsylvania 18848(US)

(74) Representative: Patentanwälte Grünecker,
Kinkeldey, Stockmair & Partner
Maximilianstrasse 58
D-8000 München 22(DE)

(54) Fine spherical powder particles and process for producing same.

(57) A powdered material and a process for producing same are disclosed. The powdered material essentially consists of spherical particles selected from the group consisting of metal based materials, ceramic glasses, crystalline ceramic materials and combinations of these. The material is essentially free of elliptical shaped material and elongated particles having rounded ends. The process for making the spherical particles involves mechanically reducing the size of a starting material to produce a finer powder. The finer powder is entrained in a carrier gas and passed through a high temperature zone at a temperature above the melting point of the powder to melt at least about 50% of the powder and form the spherical particles of the melted portion. The powder is then directly solidified.

Fig. 1a

## FINE SPHERICAL POWDER PARTICLES AND PROCESS FOR PRODUCING SAME

This invention relates to fine spherical powder particles and to a process for producing the particles which involves mechanically reducing the size of a starting material followed by high temperature processing to produce fine spherical particles. More particularly, the high temperature process is a plasma process.

U.S. Patent 3,909,241 to Cheney et al relates to free flowing powders which are produced by feeding agglomerates through a high temperature plasma reactor to cause at least partial melting of the particles and collecting the particles in a cooling chamber containing a protective gaseous atmosphere where the particles are solidified.

Fine spherical metal particles such as iron, cobalt, nickel, chromium and alloys thereof are used in applications such as filters, precision press and sinter parts and injection molded parts. Typical alloys include, but are not limited to, low alloy steels, stainless steels tool steel powders, nickel and cobalt based superalloys. In such applications, the powders are consolidated by standard methods such as hot or warm extrusion, PM forging and metal injection molding, or pressing and sintering.

Some of the better commercial processes for producing such metal powder particles are by gas or water atomization. Only a small percentage of the powder produced by atomization is less than about 20 $\mu$m. Therefore, yields are low and metal powder costs are high as a result and in the case of water atomization, the powder is often not spherical.

Fine spherical precious metal powders such as gold, silver, platinum, palladium, ruthenium and osmium and their alloys are useful in applications such as electronics, electrical contacts and parts, brazing alloys, dental alloy applications such as fixed restorations, crown and bridge, amalgam alloys and solders. Typically, materials used in microcircuits have a particle size of less than about 20 $\mu$m as shown in U.S. Patent 4,439,468.

The only commercial process for producing such metal powder particles is by gas or water atomization. Only a small percentage of the powder produced by atomization is less than about 20 $\mu$m in size. Therefore, yields are low and powder costs are high as a result.

Fine spherical copper powders are useful in applications such as electronics, electrical contacts and parts, and parts requiring good electrical and/or thermal conductivity. Typically materials used in microcircuits have a particle size of less than 20 $\mu$m as shown in U.S. Patent 4,439,468.

The only commercial process for producing such copper powder particles is by gas or water atomization. Only a small percentage of the powder produced by atomization is less than about 20 $\mu$m in size. Therefore, yields are low and powder costs are high as a result.

The only commercial process for producing fine spherical particles of light metals such as aluminum, magnesium and beryllium is by gas or water atomization. In some instances the process does not produce a high yield of spherical particles.

The only commercial process for producing spherical particles of titanium based material is by the rotating electrode process and plasma rotating electrode process. Only a small percentage of the powder produced by these processes is less than about 50 $\mu$m.

These materials are used in structural components as aerospace applications, engines, air frames, biomedical implants, dental appliances and implants, and orthodontic applicances.

Spherical refractory metal powders such as tungsten, molybdenum, niobium, tantalum, rhenium and their alloys are useful in applications requiring good thermal and electrical conductivity and/or endurance at high temperatures and/or abrasive environments. Parts such as filters, precision press and sinter parts, injection molded parts, and electrical/electronic components may be made from these powders.

Refractory metal powders are generally produced by the reduction of oxides or the salts to metal resulting in non-spherical powder. Refractory based alloy powders containing difficult-to-reduce elements such as chromium, silicon, aliminum and vanadium must be made from processes resulting in a coarse, often non-spherical powder.

In European Patent Application WO8402864, there is disclosed a process for making ultra-fine powder by directing a stream of molten droplets at a repellent surface whereby the droplets are broken up and repelled and thereafter solidified as described therein. While there is a tendency for spherical particles to be formed after rebounding, it is stated that the molten portion may form elliptical shaped or elongated particles with rounded ends.

It is the object of the present invention to provide a powdered material essentially consisting of fine spherical particles and a process for producing same efficiently.

Said object is achieved in one aspect of this invention by a powdered material essentially consisting of spherical particles selected from the group consisting of metal based materials, ceramic glasses, crystalline ceramic materials and combinations thereof, said powdered material being essentially free of elliptical shaped materials and free of elongated particles having rounded ends.

In accordance with another aspect of this invention, said object is achieved by a process for producing fine spherical powder particles, said process comprising:

a) mechanically reducing the size of the starting material from which said powder is to be made to produce a fine powder,

b) entraining said finer powder in a carrier gas and passing said powder through a high temperature zone at a temperature above the melting point of said finer powder to melt at least about 50% by weight of said finer powder and essentially form fine spherical particles of said melted portion; and

c) resolidifying the resulting high temperature treated material.

Figures 1a and b are SEM photomicrographs of a typical starting material of this invention, an iron based alloy, at magnifications of about 490x and about 1000x respectively.

Figures 2a and b are SEM photomicrographs of a typical attritor milled powder feedstock for producing the spherical particles of this invention at magnifications of about 500x and about 1000x respectively.

Figures 3a and b are SEM photomicrographs of a typical fine spherical powder produced by the process of this invention at magnifications of about 500x and 1000x respectively. The powder has not been classified.

Figures 4a and b are SEM photomicrographs of a typical fine spherical powder produced by the process of this invention at magnifications of about 500x and about 1000x respectively. The powder has been classified to obtain the desired particle size.

Figures 5a and b are SEM photomicrographs of a typical fine spherical powder at magnifications of about 500x and about 1000x respectively, made of gas atomization.

The above photomicrographs have a scale in $\mu$m from which approximate particle sizes of the particles shown can be determined.

For a better understanding of the present invention, reference is made to the following disclosure and appended claims in connection with the above described figures and description of some of the aspects of the invention.

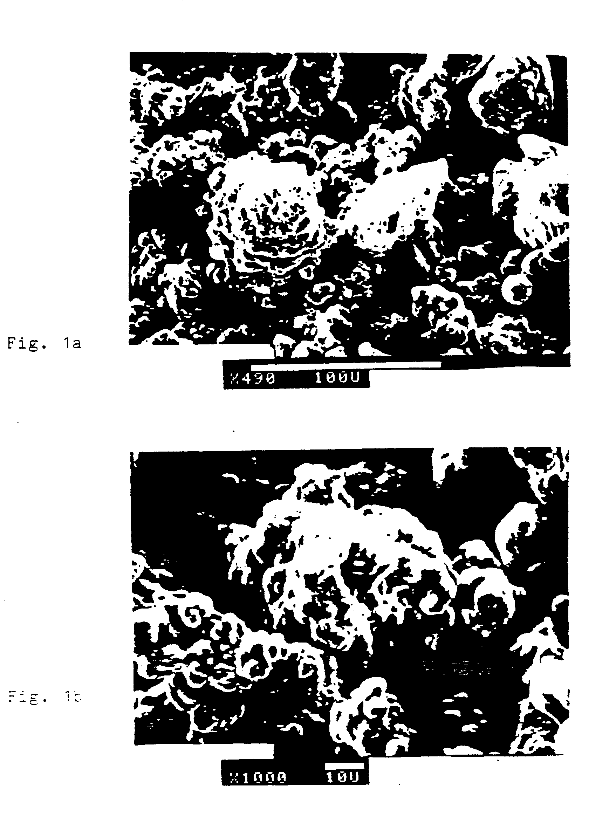

The starting material of this invention can be essentially any type of material. However, the preferred materials are metal based materials, ceramic glasses and crystalline ceramic materials, and combinations thereof, with metals and metal alloys being the especially preferred materials. The major criteria for producing ceramic materials by this process is that they maintain chemical stability up to their melting point. Figure 1 shows an iron based alloy starting material.

The metal based starting materials are preferably iron group based materials, chromium based materials, copper based materials, refractory metal based materials, precious metal based materials, light metal based materials and titanium based materials. The term "based materials" as used in this invention means the metal or any of its alloys, with or without additions of compounds.

In the case of iron group based materials, said additional compounds may be selected from the group consisting of oxides, nitrides, borides, carbides, silicides, as well as complex compounds such as carbonitrides. The iron group based materials as used in this invention can be iron, cobalt and nickel. The especially preferred materials are stainless steel, low alloy steels, tool steels, maraging steels and high speed steels, alloys or iron and nickel with varying amounts of carbon ranging from about 0.00% to about 1.5% by weight, nickel and cobalt-based wear resistant alloys, and alloys of iron containing an additional element selected from the group consisting of aluminum, cobalt and mixtures thereof.

In the case of refractory metal based materials, the refractory metals on which the materials are based are tungsten, molybdenum, niobium, tantalum and rhenium. The additional compounds may be selected from the group consisting of oxides, nitrides, borides, carbides, silicides as well as complex compounds such as carbonitrides. Some preferred refractory metal based materials of this invention are tungsten metal, tungsten heavy alloys, molybdenum alloys containing one or more elements selected from the group consisting of titanium, zirconium and hafnium, tungsten alloyed with rhenium and molybdenum alloyed with rhenium. For purposes of illustration, the following are given as preferred materials of this invention with the constituents being expressed in weight units: (1) tungsten alloyed with about 25% rhenium, (2) tungsten alloyed with silver or copper, (3) heavy tungsten alloys containing from about 90% to about 97% tungsten alloyed with either copper and nickel or iron and nickel plus additional elements, (4) molybdenum TZM such as molybdenum alloyed with from about 0.01% to about 0.04% carbon, from about 0.40% to about 0.55% titanium, from about 0.06% to about 0.12% zirconium, less than about 0.0025% oxygen, less than about 0.0005% hydrogen, less than about 0.002% nitrogen, less than about 0.010% iron, less than about 0.002% nickel and less than about 0.008% silicon, (5) molybdenum alloyed with about 5%, 35% or 41% rhenium, (6) rhenium alloyed with tungsten and molybdenum, (7) tantalum alloyed with silicon (8) tantalum with additions of oxides such as thoria or yttria with or without silicon additions, (9) tantalum alloyed with tungsten and/or hafnium for example containing about 2.5%, 7.5% and 10% tungsten, and (10) alloys containing about 10% hafnium and about 1% titanium.

In the case of copper based materials, the additional compounds may be selected from the group consisting of oxides, nitrides, borides, carbides, silicides as well as complex compounds such as carbonitrides and mixtures thereof. The preferred materials are wear resistant conductive dispersed phases such as titanium diboride.

In the case of precious metal based materials, the additional compounds may be selected from the group consisting of oxides, nitrides, borides, carbides, silicides as well as complex compounds such as carbonitrides and mixtures thereof. The preferred additives are wear resistant conductive dispersed phases, such as titanium diboride, cadmium oxide, germanium oxide, tin oxide and mixtures thereof.

In the case of light metal based materials, the additional compounds may be selected from the group consisting of oxides, nitrides, borides, carbides, silicides as well as complex compounds such as carbonitrides and mixtures thereof. One preferred light metal based material is aluminum with titanium diboride.

In the case of titanium based materials, the additional compounds may be oxides, nitrides, borides, carbides, silicides as well as complex compounds such as carbonitrides and mixtures thereof. The preferred materials are titanium based alloys containing strengthening dispersed phases such as titanium diboride.

The size of the starting material is first mechanically reduced to produce a finer powder material. The starting material can be of any size or diameter initially, since one of the objects of this invention is to reduce the diameter size of the material from the initial size.

The mechanical size reduction can be accomplished by standard techniques such as by crushing, jet milling, attritor, rotary or vibratory milling with attritor milling being the preferred technique for materials having a starting size of less than about 1000μm.

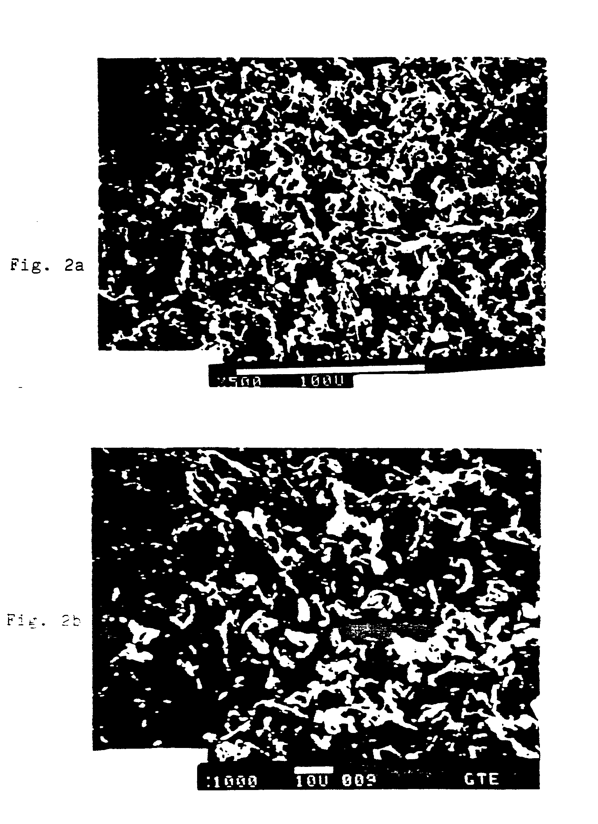

A preferred attritor mill is manufactured by Union Process under the trade name of "The Szegvari Attritor". This mill is a stirred media ball mill. It is comprised of a water jacketed stationary cylindrical tank filled with small ball type milling media and a stirrer which consists of a vertical shaft with horizontal bars. As the stirrer rotates, balls impact and shear against one another. If metal powder is introduced into the mill, energy is transferred through impact and shear from the media to the powder particles, causing cold work and fracture fragmentation of the powder particles. This leads to particle size reduction. The milling process may be either wet or dry, with wet milling being the preferred technique. During the milling oepration, the powder can be sampled and the particle size measured. When the desired particle size is attained, the milling operation is considered to be complete. The particle size measurement is done by conventional methods as sedigraph, micromerograph and microtrac with micromerograph being the preferred method. Figure 2 shows iron based powder which has been attritor milled.

The resulting reduced size material or finer powder is then dried if it has been wet such as by a wet milling technique.

If necessary, the reduced size material is exposed to high temperature and controlled enviroment to remove carbon and oxygen, etc.

The reduced size material is then entrained in a carrier gas such as argon and passed through a high temperature zone at a temperature abvoe the melting point of the finer powder for a sufficient time to melt to at least about 50% by weight of the finer powder and form essentially fine particles of the melted portion. Some additional particles can be partially melted or melted on the surface and these can be spherical particles in addition to the melted portion. The preferred high temperature zone is a plasma.

Details of the principles and operation of plasma reactors are well known. The plasma has a high temperature zone, but in cross section the temperature can vary typically from about 5500°C to about 17000°C. The outer edges are at low temperatures and the inner part is at a higher temperature. The retention time depends upon where the particles entrained in the carrier gas are injected into the nozzle of the plasma gun. Thus, if the particles are injected into the outer edge, the retention time must be longer, and if they are injected into the inner portion, the retention time is shorter. The residence time in the plasma flame can be controlled by choosing the point at which the particles are injected into the plasma. Residence time in the plasma is a function of the physical properties of the plasma gas and the powder material itself for a given set of plasma operating conditions and powder particles. Larger particles are more easily injected into the plasma while smaller particles tend to remain at the outer edge of the plasma jet or are deflected away from the plasma jet.

As the material passes through the plasma and cools, it is rapidly solidified. Generally, the major weight portion of the material is converted to spherical particles. Generally greater than about 75% and most typically geater than about 85% of the material is converted to spherical particles by the high temperature treatment. Nearly 100% conversion to spherical particles can be attained. The particle size of the plasma treated particles is largely dependent of the size of the material obtained in the mechanical size reduction step.

For the iron group based materials and chromium based materials, the particle sizes are preferrably less than about 20μm, more preferably less than about 15μm and most preferred less than about 10μm and greater than about 3μm. Such powders are used in applications such as metal powder injection molding, powder forging, press and sinter and other precision and conventional powder consolidation techniques.

For the refractory metal based materials, the major portion of the spherical particles is preferably less than about 50μm.

The copper based materials and the precious metal based materials, the major portion of the spherical particles is preferably less than about 20μm, more preferably less than about 15μm and most preferably less than 10μm.

For the light metal based materials and the titanium based materials, the particle sizes are preferably less than about 50μm and more preferably less than about 20μm.

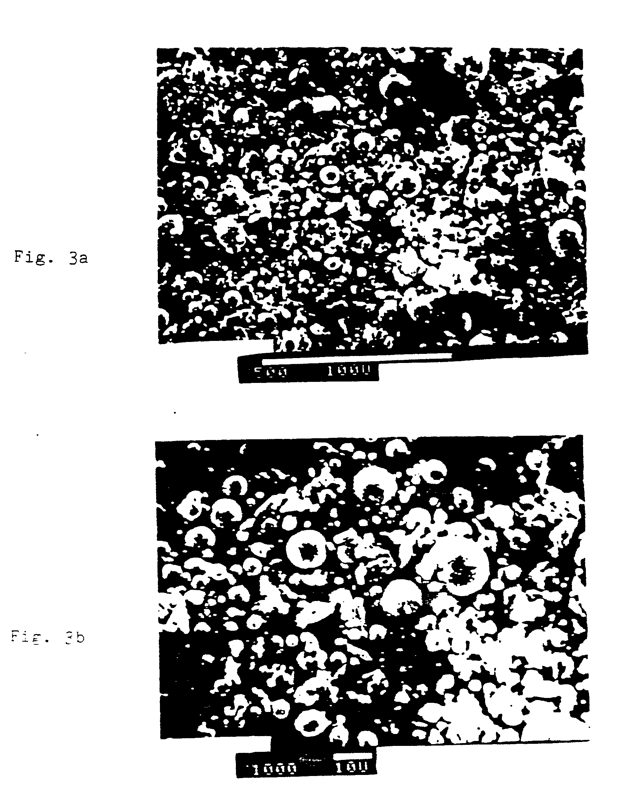

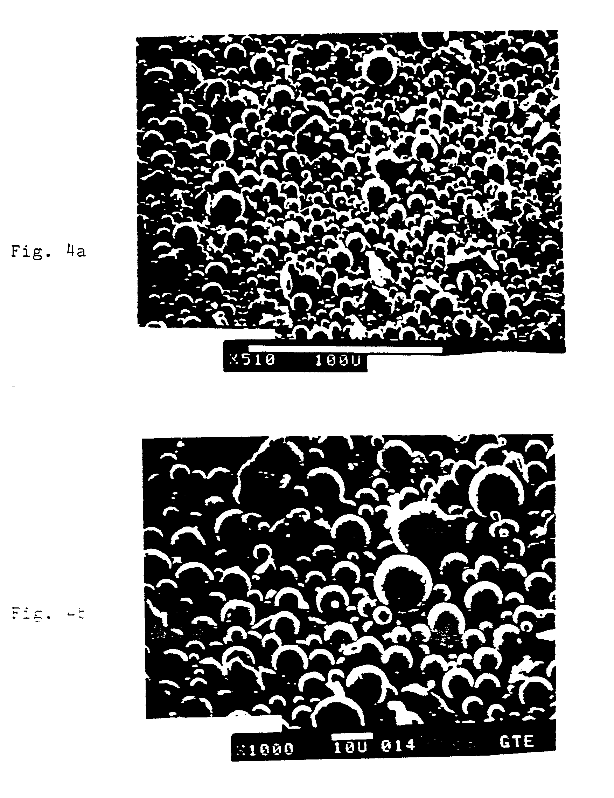

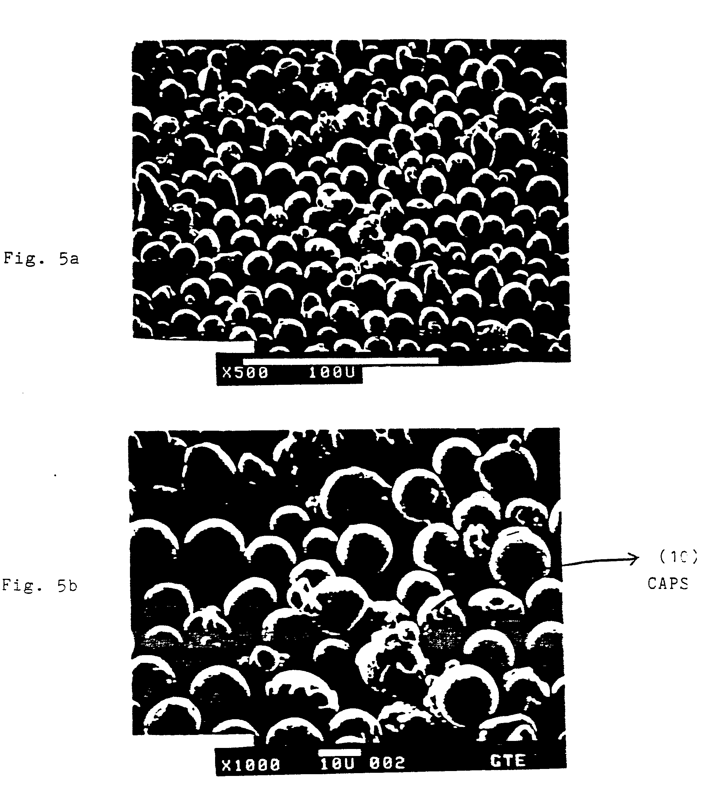

Figures 3a and b are SEM photomicrographs of iron based material produced by the plasma treatment of mechanically reduced material. The material is not preclassified. It can be seen that the spherical particles of the present invention are different from those of the gas atomization process because the latter have caps on the particles as is shown in gas atomized particles in Figure 5b (10), whereas those of the present invention shown in Figures 3 and 4 do not have such caps. Caps are the result of particle-particle collision in the molten or semi-molten state during the gas atomization event.

After cooling and resolidification, the resulting high temperature reated material can be classified to remove the major spheroidized particle portion from the essentially non-spheroidized minor portion of the particles and to obtain the desired technique such as screening or air classification. The unmelted minor portion can then be reprocessed according to the invention to convert it to fine spherical particles. Figure 4a and b shows picture of classified particles of the present invetnion in which the non-spherical portion has been removed.

The powdered materials of this invention are essentially relatively uniform spherical particles which are essentially free of elliptical shaped material and essentially free of elongated particles having rounded ends. These characteristics can be present in the particles made by the process described in European Patent Application WO8402864 as previously mentioned.

Spherical particles have an advantage over non-spherical particles in injection molding and pressing and sintering operations. The lower surface area of spherical particles as opposed to non-spherical particles of comparable size, and the flowability of spherical particles makes spherical particles easier to mix with binders and easier to dewax.

In applications in which powders are used directly as in conversion of tungsten to tungsten carbide, the more uniformly shaped spherical powder particles of this invention enable that uniformity to be achieved in materials produced therefrom.

In electrical contacts utilizing tungsten and silver, the uniform shaped material of this invention enables comparable electrical properties to be achieved using less silver because of the packing efficiency of the uniform particles and their lower surface area.

It has been found that extremely fine spherical shaped particles having a particle size of, for example, less than about 10μm, because of the uniform shape of the particles, have vastly improved characteristics of organic carrier addition and removal, dispersion qualities and conductivity. Uniformly shaped material of this invention enables comparable electrical properties to be achieved using less silver because of the packing efficiency of the uniform particles and their lower surface area.

May precious metal based materials are useful in electronic circuitry applications in the form of inks and pastes. The finely divided spherical powders of the present invention provide improved carrier addition and removal, uniformity of application and uniformity of electrical and thermal properties. Precious metals such as gold are used in conjunction with dispersed phases such as cadmium oxide as electrical contacts. The uniform shape of the silver powders of this invention enables more uniform distribution of cadmium which is converted to the oxide by conventional processes. Precious metal brazing alloys may be utilized as pastes or as metal preforms. The materials of this invention when used as pastes provide more uniformity and enable more rapid carrier removal. When the materials of this invention are formed as foils by the conventional doctor blade method, a greater uniformity in the foil is achieved than by using prior art powders. When used as dental alloys, the powders of this invention yield finer dispersions of the particulate phases, greater corrosion resistance and higher strength for improved marginal integrity.

A preferred light metal powder of this invention is aluminum with titanium diboride. Many of the light metals are consolidated into shapes by cold pressing followed by hot isostatic pressing. Said powders enable more uniform consistent die filling by virtue of their spherical shape.

Furthermore, the process of this invention allows finer titanium based powder to be produced. Said powders are unique and are more rapidly cooled during melting and yield consolidated material having a smaller grain size and smaller precipitates than similar titanium based produced by prior art powder processes.

The following example illustrates the invention.

Example

About 2.5 kg of coarse gas atomized iron alloy is milled in a Union Process 1-S laboratory attritor mill. Tungsten carbide 0.1 cm (1/4") balls are used as media with n-hexane as a milling fluid. The powder is milled for about 4h at about 155 rpm agitator speed. The speed is reduced to about 140 rpm and milling continues for about an additional 10h. The powder slurry is heated to evaporate the n-hexane, yielding dry powder. This size reduced powder is fed to a plasma heat source with argon as a carrier gas at a flow rate of about 3 l per min. The plasma torch is run at the following conditions:

Gas Flow: Argon    -about 28 l per min.
Helium    -about 25 l per min.
Power    10.5 kW

The powder is collected after plasma melting. It is then screened and air classified to obtain the desired particle size as well as to remove most of the minor portion of non-spherical particles.

**Claims**

1. A process for producing fine spherical powder particles, said process comprising:

a) mechanically reducing the size of the starting material from which said powder is to be made to produce a finer powder,

b) entraining said finer powder in a carrier gas and passing said powder through a high temperature zone at a temperature above the melting point of said finer powder to melt at least about 50% by weight of said finer powder and form essentially fine spherical particles of said melted portion; and

c) resolidifying the resulting high temperature treated material.

2. The process of claim 1 wherein the size of said starting material is reduced by attritor milling said material to produce said finer powder.

3. The process of claim 1 or 2 wherein said high temperature zone is a plasma.

4. The process of any of claims 1 through 3 wherein after said resolidification, said high temperature treated material is classified to obtain the desired particle size of said spherical particles.

5. The process of any of claims 1 to 4 wherein said starting material is selected from the group consisting of metal based materials, ceramic glasses, crystalline ceramic materials, and combinations thereof.

6. The process of claim 5 wherein said starting material is selected from the group consisting of metals and metal alloys.

7. The process of claim 5 wherein said metal based material is an iron group based material.

8. The process of claim 7 wherein said iron group based material is an iron group based metal.

9. The process of claim 8 wherein said iron group based metal is selected from the group consisting of iron metal, cobalt metal, and nickel metal.

10. The process of claim 7 wherein said iron group based material is an iron group based alloy.

11. The process of claim 10 wherein said iron group based alloy is selected from the group consisting or iron alloys, cobalt alloys, and nickel alloys.

12. The process of claim 5 wherein said metal based material is a chromium based material.

13. The process of claim 12 wherein said chromium based material is chromium metal.

14. The process of claim 12 wherein said chromium based material is a chromium alloy.

15. The process of claim 5 wherein said starting material is selected from the group consisting of stainless steels, low alloy steels, tool steels, maraging steels, alloys of iron and nickel with varying amounts of carbon ranging from about 0.00% to about 1.5% by weight, nickel and cobalt-based wear resistant alloys, and alloys of iron containing an additional element selected from the group consisting of aluminium, cobalt, and mixtures thereof.

16. The process of any of claims 7 to 15 wherein said fine spherical particles have a particle size of less than about $20\mu m$.

17. The process of any of claims 7 to 15 wherein said fine spherical particles have a particle size of less than about $15\mu m$.

18. The process of any of claims 7 to 15 wherein said fine spherical particles have a particle size of less than about $10\mu m$.

19. The process of any of claims 7 to 15 wherein said fine spherical particles have a particle size of greater than about $3\mu m$.

20. The process of claim 5 wherein said metal based material is a refractory based material.

21. The process of claim 20 wherein said refractory metal based material is a metal selected from the group consisting of tungsten, molybdenum, niobium, tantalum, and rhenium.

22. The process of claim 20 wherein said refractory metal based material is an alloy selected from the group consisting of tungsten alloys, molybdenum alloys, niobium alloys, tantalum alloys, and rhenium alloys.

23. The process of claim 20 wherein said refractory metal based material is selected from the group consisting of tungsten metal, tungsten heavy alloys, molybdenum alloys containing one or more elements selected from the group consisting of titanium, zirconium, and hafnium, tungsten alloyed with rhenium, and molybdenum alloyed with rhenium.

24. The process of any of claims 20 to 23 wherein said fine spherical particles have a particle size of less than about 50μm.

25. The process of claim 5 wherein said metal based material is a copper based material.

26. The process of claim 25 wherein said copper based material is copper metal.

27. The process of claim 25 wherein said copper based material is a copper alloy.

28. The process of claim 25 wherein said copper based material is copper metal with additives selected from the group consisting of oxides, nitrides, borides, carbides, silicides, carbonitrides, and mixtures thereof.

29. The process of claim 25 wherein said copper based material is a copper based alloy with additives selected from the group consisting of oxides, nitrides, borides, carbides, silicides, carbonitrides, and mixtures thereof.

30. The process of any of claims 25 to 29 wherein said fine spherical particles have a particle size of less than about 20μm.

31. The process of any of claims 25 to 29 wherein said fine spherical particles have a particle size of less than about 15μm.

32. The process of any of claims 25 to 29 wherein said fine spherical particles have a particle size of less than about 10μm.

33. The process of claim 5 wherein said metal based material is a precious metal based material.

34. The process of claim 33 wherein said precious metal based material is a precious metal selected from the group consisting of gold, silver, platinum, palladium, ruthenium, and osmium.

35. The process of claim 33 wherein said precious metal based material is a precious metal alloy selected from the group consisting of gold alloys, silver alloys, platinum alloys, palladium alloys, ruthenium alloys, and osmium alloys.

36. The process of claim 33 wherein said precious metal based material is a precious metal with additives selected from the group consisting of titanium diboride, cadmium oxide, germanium oxide, tin oxide, and mixtures thereof.

37. The process of claim 33 wherein said precious metal based material is a precious metal alloy with additives selected from the group consisting of titanium diboride, cadmium oxide, germanium oxide, tin oxide, and mixtures thereof.

38. The process of claim 33 wherein said precious metal based material is a precious metal with additives selected from the group consisting of oxides, nitrides, borides, carbides, silicides, carbonitrides, and mixtures thereof.

39. The process of claim 33 wherein said precious metal based material is a precious metal alloy with additives selected from the group consisting of oxides, nitrides, borides, carbides, silicides, carbonitrides, and mixtures thereof.

40. The process of any of claims 33 to 39 wherein said fine spherical particles have a particle size of less than about 20μm.

41. The process of any of claims 33 to 39 wherein said fine spherical particles have a particle size of less than about 15μm.

42. The process of any of claims 33 to 39 wherein said fine spherical particles have a particle size of less than about 10μm.

43. The process of claim 5 wherein said metal based material is a light metal based material.

44. The process of claim 43 wherein said light metal based material is a metal selected from the group consisting of aluminum, magnesium, and beryllium.

45. The process of claim 43 wherein said light metal based material is an alloy selected from the group consisting of aluminum alloys, magnesium alloys, and beryllium alloys.

46. The process of claim 43 wherein said light metal based material is a light metal with additives selected from the group consisting of oxides, nitrides, borides, carbides, silicides, carbonitrides, and mixtures thereof.

47. The process of claim 43 wherein said light metal based material is a light metal alloy with additives selected from the group consisting of oxides, nitrides, borides, carbides, silicides, carbonitrides, and mixtures thereof.

48. The process of any of claims 43 to 47 wherein said fine spherical particles have a particle size of less than about 50μm.

49. The process of any of claims 43 to 47 wherein said fine spherical particles have a particle size of less than about 20μm.

50. The process of claim 5 wherein said metal based material is a titanium based material.

51. The process of claim 50 wherein said titanium based material is titanium metal.

52. The process of claim 50 wherein said titanium based material is a titanium alloy.

53. The process of claim 50 wherein said titanium based material is titanium metal with additives selected from the group consisting of oxides, nitrides, borides, carbides, silicides, carbonitrides, and mixtures thereof.

54. The process of claim 50 wherein said titanium based material is a titanium alloy with additives selected from the group consisting of oxides, nitrides, borides, carbides, silicides, carbonitrides, and mixtures thereof.

55. The process of any of claims 50 to 54 wherein said fine spherical particles have a particle size of less than about $50\mu m$.

56. The process of any of claims 50 to 54 wherein said fine spherical particles have a particle size of less than about $20\mu m$.

57. A powdered material consisting essentially of spherical particles selected from the group consisting of metal based materials, ceramic glasses, crystalline ceramic materials, and combinations thereof, said powdered material being essentially free of elliptical shaped material and essentially free of elongated particles having rounded ends.

58. The powdered material of claim 57 wherein said particles are selected from the group consisting of metals, and metal alloys.

59. The powdered material of claim 57 wherein said metal based material is an iron group based material.

60. The powdered material of claim 59 wherein said iron group based material is an iron group based metal.

61. The powdered material of claim 60 wherein said iron group based metal is selected from the group consisting of iron metal, cobalt metal, and nickel metal.

62. The powdered material of claim 59 wherein said iron group based material is an iron group based alloy.

63. The powdered material of claim 62 wherein said iron group based alloy is selected from the group consisting of iron alloys, cobalt alloys, and nickel alloys.

64. The powdered material of claim 57 wherein said metal based material is a chromium based metal.

65. The powdered material of claim 64 wherein said chromium based material is chromium metal.

66. The powdered material of claim 63 wherein said chromium based material is a chromium alloy.

67. The powdered material of claim 57 wherein said powdered material is selected from the group consisting of stainless steels, low alloy steels, tool steels, maraging steels, alloys of iron and nickel with varying amounts of carbon ranging from about 0.00% to about 1.5% by weight, nickel and cobalt-based wear resistant alloys, and alloys of iron containing an additional element selected from the group consisting of aluminium, cobalt, and mixtures thereof.

68. The powdered material of any of claims 59 to 67 wherein said spherical particles have a particle size of less than about $20\mu m$.

69. The powdered material of any of claims 59 to 67 wherein said spherical particles have a particle size of less than about $15\mu m$.

70. The powdered material of any of claims 59 to 67 wherein said spherical particles have a particle size of less than about $10\mu m$.

71. The powdered material of any of claims 59 to 67 wherein said spherical particles have a particle size of greater than about $3\mu m$.

72. The powdered material of claim 57 wherein said metal based material is a refractory based material.

73. The powdered material of claim 72 wherein said refractory metal based material is a metal selected from the group consisting of tungsten, molybdenum, niobium, tantalum, and rhenium.

74. The powdered material of claim 72 wherein said refractory metal based material is an alloy selected from the group consisting of tungsten alloys, molybdenum alloys, niobium alloys, tantalum alloys, and rhenium alloys.

75. A powdered material of claim 72 wherein said refractory metal based material is selected from the group consisting of tungsten metal, tungsten heavy alloys, molybdenum alloys containing one or more elements selected from the group consisting of titanium, zirconium, and hafnium, tungsten alloyed with rhenium, and molybdenum alloyed with rhenium.

76. The powdered material of any of claims 72 to 75 wherein said spherical particles have a particle size of less than about $50\mu m$.

77. The powdered material of claim 57 wherein said metal based material is a copper based material.

78. The powdered material of claim 77 wherein said copper based material is copper metal.

79. The powdered material of claim 77 wherein said copper based material is a copper alloy.

80. The powdered material of claim 77 wherein said copper based material is copper metal with additives selected from the group consisting of oxides, nitrides, borides, carbides, silicides, carbonitrides, and mixtures thereof.

81. The powdered material of claim 77 wherein said copper based material is a copper based alloy with additives selected from the group consisting of oxides, nitrides, borides, carbides, silicides, carbonitrides, and mixtures thereof.

82. The powdered material of any of claims 77 to 81 wherein said spherical particles have a particle size of less than about 20μm.

83. The powdered material of any of claims 77 to 81 wherein said spherical particles have a particle size of less than about 15μm.

84. The powdered material of any of claims 77 to 81 wherein said spherical particles have a particle size of less than about 10μm.

85. The powdered material of claim 57 wherein said metal based material is a precious metal based material.

86. The powdered material of claim 85 wherein said precious metal based material is a precious metal selected from the group consisting of gold, silver, platinum, palladium, ruthenium, and osmium.

87. The powdered material of claim 85 wherein said precious metal based material is a precious metal alloy selected from the group consisting of gold alloys, silver alloys, platinum alloys, palladium alloys, ruthenium alloys, and osmium alloys.

88. The powdered material of claim 85 wherein said precious metal based material is precious metal with additives selected fom the group consisting of titanium diboride, cadmium oxide, germanium oxide, tin oxide, and mixtures thereof.

89. The powdered material of claim 85 wherein said precious metal based material is a precious metal alloy with additives selected from the group consisting of titanium diboride, cadmium oxide, germanium oxide, tin oxide, and mixtures thereof.

90. The powdered material of claim 85 wherein said precious metal based material is a precious metal with additives selected from the group consisting of oxides, nitrides, borides, carbides, silicides, carbonitrides, and mixtures thereof.

91. The powdered material of claim 85 wherein said precious meal based material is a precious metal alloy with additives selected from the group consisting of oxides, nitrides, borides, carbides, silicides, carbonitrides, and mixtures thereof.

92. The powdered material of any of claims 85 to 91 wherein said spherical particles have a particle size of less than 20μm.

93. The powdered material of any of claim 85 to 91 wherein said spherical particles have a particle size of less than about 15μm.

94. The powdered material of any of claims 85 to 91 wherein said spherical particles have a particle size of less than about 10μm.

95. The powdered material of claim 57 wherein said metal based material is a light metal based material.

96. The powdered material of claim 95 wherein said light metal based material is a metal selected from the group consisting of aluminium, magnesium, and beryllium.

97. The powdered material of claim 95 wherein said light metal based material is an alloy selected from the group consisting of aluminium alloys, magnesium alloys and beryllium alloys.

98. The powdered material of claim 95 wherein said light metal based material is a light metal with additives selected from the group consisting of oxides, nitrides, borides, carbides, silicides, carbonitrides, and mixtures thereof.

99. The powdered material of claim 95 wherein said light metal based material is a light metal alloy with additives selected from the group consisting of oxides, nitrides, borides, carbides, silicides, carbonitrides, and mixtures thereof.

100. The powdered material of claim 95 wherein said light metal based material is aluminium with titanium diboride.

101. The powdered material of any of claims 95 to 100 wherein said spherical particles have a particle size of less than about 50μm.

102. The powdered material of any of claims 95 to 100 wherein said spherical particles have a particle size of less than about 20μm.

103. The powdered material of claim 57 wherein said metal based material is a titanium based material.

104. The powdered material of claim 103 wherein said titanium based material is titanium metal.

105. The powdered material of claim 103 wherein said titanium based material is a titanium alloy.

106. The powdered material of claim 103 wherein said titanium based material is titanium metal with additives selected from the group consisting of oxides, nitrides, borides, carbides, silicides, carbonitrides, and mixtures thereof.

107. The powdered material of claim 103 wherein said titanium based material is a titanium alloy with additives selected from the group consisting of oxides, nitrides, borides, carbides, silicides, carbonitrides, and mixtures thereof.

108. The powdered material of any claims 103 to 107 wherein said spherical particles have a particle size of less than about 50μm.

109. The powdered material of any of claims 103 to 107 wherein said spherical particles have a particle size of less than about 20μm.

110. The powdered material of any of claims 57 to 109 which has been directly solidified from high temperature treated material.

Fig. 1a

Fig. 1b

Fig. 2a

Fig. 2b

Fig. 3a

Fig. 3b

Fig. 4a

Fig. 4b

Fig. 5a

X500    100U

Fig. 5b

X1000    10U  002          GTE

(10)
CAPS